(19) Europäisches Patentamt
European Patent Office
Office européen des brevets

(11) **EP 2 537 576 A1**

(12) **EUROPEAN PATENT APPLICATION**

(43) Date of publication:
**26.12.2012 Bulletin 2012/52**

(51) Int Cl.:
*B01D 63/02* (2006.01)     *B01D 61/24* (2006.01)
*C02F 1/26* (2006.01)     *C02F 1/44* (2006.01)
*G21F 9/12* (2006.01)     *C22B 3/24* (2006.01)
*B01D 61/38* (2006.01)

(21) Application number: **11171339.2**

(22) Date of filing: **24.06.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Nederlandse Organisatie voor Toegepast -Natuurwetenschappelijk Onderzoek TNO 2628 VK Delft (NL)**

(72) Inventors:
• **van Erkel, Joost 2628 VK Delft (NL)**

• **Bikel, Matias 2628 VK Delft (NL)**
• **Bisselink, Roel Johannes Martinus 2628 VK Delft (NL)**
• **Brouwer, Johan Gerrit Henricus 2628 VK Delft (NL)**

(74) Representative: **Jansen, Cornelis Marinus et al VEREENIGDE Johan de Wittlaan 7 2517 JR Den Haag (NL)**

(54) **Pertraction process**

(57)     The invention is directed to a pertraction process for lowering the concentration of one or more target compounds in a feed solution.

The process of the invention comprises
- flowing on a first side of one or more hollow fibre membranes a first liquid comprising extracting agent and a second liquid acting as strip liquid, wherein said first liquid is immiscible with said second liquid, and wherein said first liquid and second liquid flow on the first side of the one or more hollow fibre membranes in a slug flow and wherein at least part of the first liquid is present in pores of the membrane; and
- contacting the feed solution with the surface of a second side of the one or more hollow fibres.

Figure 4

| SLUG FLOW PERTRACTION | EMULSION PERTRACTION |

■ Membrane

▨ Extractant

▨ Aqueous phase / stripping acid

EP 2 537 576 A1

## Description

The invention is directed to a pertraction process for lowering the concentration of one or more target compounds in a feed solution.

Classical extraction is a well-known technique used in the separation of components. Classical solvent extraction is based on partitioning of components between two immiscible or partially miscible phases and is widely used in numerous separations of industrial interest. It is mostly realised in systems wherein one phase is dispersed into a second phase. In many systems of interest, however, dispersion can lead to problems, such as the formation of stable emulsions that are difficult to separate.

In view of these problems, methods of separation in two phase systems have been proposed with an immobilised interface.

For instance, supported liquid membrane devices were developed by the inclusion of an extracting liquid in the pores of commercial membranes. The common name for processes wherein liquid-filled membrane pores are used for extraction is pertraction. The extracting liquid is not miscible with the liquids that are in contact with both sides of the membrane. It acts as a reacting/transporting medium for species to be extracted from one of the outer liquids into the other. Alternatively, the extracting liquid in the membrane pores is the same as the liquid on one side of the membrane and is not miscible with the liquid on the other side of the membrane.

Pertraction was developed as an extraction process which avoids (or at least reduces) the effect of emulsion formation resulting from mixing two solvent phases. In pertraction, a membrane fixates the interface between the two phases. Therefore, in a pertraction process the extracting agent is not added directly to the feed solution, as in a conventional extraction process. This offers important advantages over conventional extraction.

Typically, the solute of interest is present in an aqueous or organic phase feed solution and is transported across a hydrophobic or hydrophilic membrane into the liquid on the other side of the membrane. Considering the independent mobility of the two phases, there is better control over optimisation. With the use of membranes in the form of hollow fibres, the contact area per unit volume for these pertraction processes can be significantly increased when compared to flat sheet membranes. Another way to achieve an increase in contact area is through structuring of flat sheet membranes, effectively increasing their surface.

In comparison to conventional extraction processes, often difficult and time consuming separation between feed solution and extracting agent is not necessary. The flows of feed solution, extracting agent, and/or regenerating agent can be adjusted independently of each other, making process optimisation simple and allowing a highly efficient contact between a large volume of feed solution and a relatively small quantity of extracting agent.

Klaassen et al. (Desalination 2008, 224, 81-87) give a general description of emulsion pertraction. Typically, in this process an aqueous phase is flowing along a bundle of hollow fibre membranes. Components to be removed are bound by an extracting agent present in the pores and the inside of the hollow fibre membrane. At the inside of the hollow fibre membrane a strip liquid that is dispersed as an aqueous phase in the organic phase of the extracting agent solution continuously regenerates the extracting agent.

This process has been described in general terms in WO-A-01/56933 for the removal and recovery of target species from feed solutions. It has been specifically proposed, for instance, for the recovery of indium from waste waters and process streams (US-A-2010/0 224 030) and for the recovery of gallium from a feed solution containing gallium and copper (US-A-2010/0 226 839).

Nonetheless, this known emulsion pertraction process has a number of disadvantages. These include, for example, the relatively large amounts of extracting liquid that is required for performing the process. In addition, the regeneration of the fresh extracting liquid that resides in the pores is rather limited because the strip liquid dose not contact the liquid contained in the pores, but merely the bulk within the hollow fibre membrane. The diffusion paths are long, thereby decreasing the overall transfer coefficient. Further, it may be difficult to efficiently separate the strip liquid from the extracting liquid. In addition, additives may be required in order to stabilise the droplets in the emulsion.

Objective of the invention is to at least partly overcome these drawbacks, in particular of the conventional emulsion pertraction processes.

The inventors surprisingly found that this is possible by conducting the extracting liquid and the strip liquid through the hollow fibre membrane in a specific manner.

Accordingly, in a first aspect the invention is directed to a pertraction process for lowering the concentration of one or more target compounds in a feed solution, comprising

- flowing on a first side of one or more hollow fibre membranes a first liquid comprising extracting agent and a second liquid acting as strip liquid, wherein said first liquid is immiscible with said second liquid, and wherein said first liquid and second liquid flow on the first side of the one or more hollow fibre membranes in a slug flow and wherein at least part of the first liquid is present in pores of the membrane; and
- contacting the feed solution with the surface of a second side of the one or more hollow fibres.

The consumption of extracting liquid is strongly diminished, since it is not introduced as the continuous phase of an emulsion. Since the extracting agent (which is normally more costly than the regenerating agent) can be used in relatively small amounts, the invention allows for a cost efficient operation. Moreover, since the volume of extracting liquid can be much lower than in a conventional emulsion pertraction process, regeneration of the extracting agent is more effective.

The slugs can be supplied to the hollow fibre membrane through feeding an emulsion with big droplets, which can be prepared with less energy consumption. Alternatively, the slugs can be supplied to the hollow fibre membrane from two different sources through alternating pumping.

In addition, diffusion paths through the extracting liquid to the strip liquid are limited to the thickness of the membrane wall. Based on diffusion theory one can explain that the efficiency of the pertraction process is thereby significantly improved.

Another advantage of the invention is that separation of the slug flow stream flowing through the hollow fibre membrane at the outlet of the hollow fibre membrane is much easier due to the relatively large size of the individual slugs.

The term "slug flow" (also known as Taylor flow) as used in this application is meant to refer to a flow of two immiscible liquids, characterised by a series of alternating liquid slugs of a first phase separated by a second phase. Preferably, in the context of this invention the term slug flow refers to a flow of alternating slugs of a first liquid and a second liquid immiscible with the first liquid.

The term "slug" as used in this application is meant to refer to an isolated portion of a liquid that is delimited in its length. Preferably, the largest cross-sectional dimension of the slug is equal to or greater than the inner diameter of the hollow fibre through which the slug is transported. If the slug flow is transported through channels between the fibres, then the largest cross-sectional dimension of the slug is equal to or greater than the diameter of the channels between the hollow fibres.

The term "immiscible" as used herein is meant to refer to the situation where two liquids do not mix with one another, and will form a two-phase rather than a single-phase mixture (given en appropriate amount of standing time). The term can include slight solubility, provided that the solubility does not adversely affect the existence of a two phase liquid system between the two liquids. Preferably, the term immiscible means that 5 wt. % or less of the first liquid is soluble in the second liquid at 20 °C, more preferably 3 wt.% or less, even more preferably 1 wt.% or less.

In accordance with the process of the invention, the concentration of one or more target compounds in a feed solution that contains the one or more target compounds is lowered and stabilised. A feed solution containing the one or more target compounds is contacted with the surface of a second side of the one or more hollow fibre membranes.

In one embodiment the first side of the one or more hollow fibres is the inner side (inner surface or lumen side) of the one or more hollow fibres and the second side of the one or more hollow fibres is the outer side (external surface) of the one or more hollow fibres. In another embodiment the first side of the one or more hollow fibres is the outer side of the one or more hollow fibres and the second side of the one or more hollow fibres is the inner side of the one or more hollow fibres. In the context of this application the first and second side of the one or more hollow fibres refer to different sides of the one or more hollow fibres.

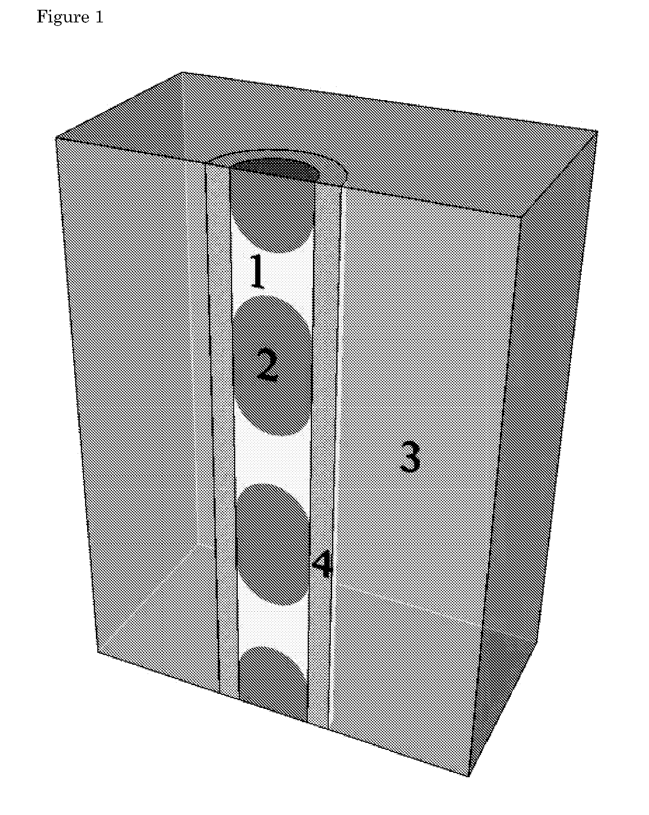

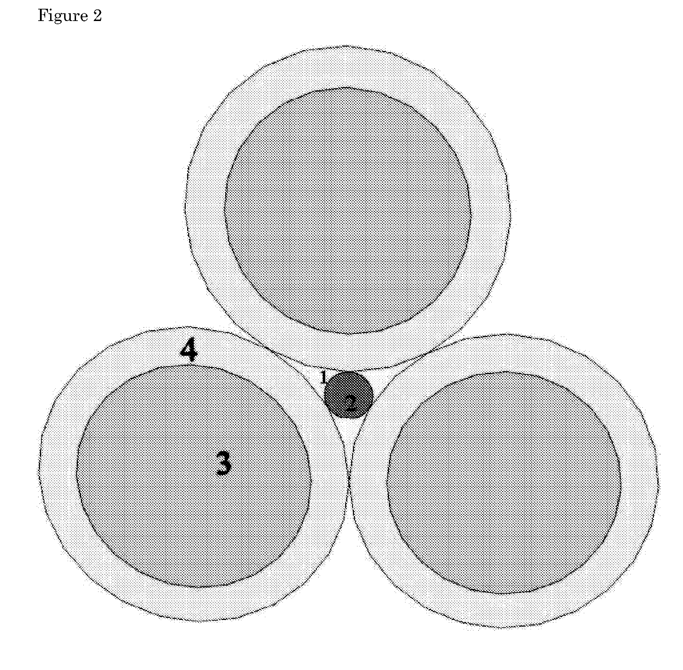

An embodiment of the pertraction process of the invention is schematically shown in figures 1 and 2. In these figures, the first liquid comprising extracting agent is identified by 1, the second liquid (stripping solution) is identified by 2, the feed solution is identified by 3, and 4 is the membrane wall saturated with the first liquid.

In a preferred embodiment, the one or more hollow fibre membranes are in the form of a hollow fibre membrane module. Such hollow fibre membrane modules typically comprise microporous hollow fibres arranged in a shell-and-tube configuration. The feed solution can either be passed through the shell side of the hollow fibre membrane module and the slug flow of first and second liquids through the tube side of the hollow fibre membrane module or *vice versa.* The use of a hollow fibre system allows continuous replenishment of the feed solution and the first and second liquid, ensuring a stable and continuous operation.

It is preferred that the first liquid is immiscible with the feed solution. The first liquid that comprises extracting agent is preferably an organic liquid or a diluted solution of the extracting agent in an organic solvent. Such a diluent is normally added to decrease the viscosity of the extracting agent. A modifier might be added to the first liquid to prevent third phase separation (i.e. when, for example, the loaded organic phase splits into a metal complex-rich phase and a diluent rich phase). The feed solution is preferably an aqueous solution. The second liquid that acts as a strip liquid is preferably an aqueous liquid.

In accordance with the invention, a slug flow is exploited within the hollow fibre membrane. Such flow is highly reproducible and can be applied in continuous mode. Due to the slug flow of alternate first and second liquids, the concentration of the one or more target compounds in the feed solution is lowered highly efficiently. The slug flow provides enhanced mixing, due to the introduction of many moving interfaces which enhance mass transfer between the different phases and mixing inside each phase. This effect is even more pronounced for fibres having non-circular geometry due to accumulation of the first liquid in sharp corners of the hollow fibre. Hence, it is preferred that the lumen of one or more hollow fibres do not have a circular cross-section. For the case where the slug flow is established between the fibres, the channels are per definition non circular. This is due to packing of fibres, which occurs in a staggered way.

The use of strip liquid according to the invention allows a continuous regeneration of the extracting agent without significantly lowering the efficiency and without requiring an excess of extracting liquid. The use of the first liquid according to the invention ensures that the pores of the membrane are continuously filled, avoiding problems created through leaching.

In a preferred embodiment of the process of the invention, the average length of the slugs of the first liquid within the one or more hollow fibre membranes is equal to or smaller than the average length of the slugs of the second liquid within the one or more hollow fibre membranes. Advantageously, this allows a reduction of the amount of extracting liquid relative to the amount of strip liquid used. The average length of the slugs of the first liquid within the one or more hollow fibre membranes can, for instance, be 80 % or less of the average length of the slugs of the second liquid within the one or more hollow fibre membranes, preferably 75 % or less, or 50 % or less, such as in the range of 20-50 % of the average length of the slugs of the second liquid within the one or more hollow fibre membranes.

Suitably, the average length of the slugs of the first liquid in the one or more hollow fibre membranes can be in the range of 1-100 times, preferably 1-10 times the inner diameter of the fibre. The average length of the slugs of the second liquid in the one or more hollow fibre membranes can be in the range of 1-100 times, preferably 1-10 times the inner diameter of the fibre.

The one or more hollow fibre membranes can suitably comprise one or more polymers. Examples of suitable polymers that may be used to fabricate the hollow fibre membranes include, but are not limited to, polypropylene, polytetrafluorethylene, polyethylene, polysulphone, polyethersulphone, polyetheretherketone, polyimide, polyamide, and mixtures thereof. Depending on the used liquids, the one or more hollow fibre membranes can be hydrophobic in nature. In a preferred embodiment, polypropylene hollow fibre membranes are used.

The one or more hollow fibre membranes used in the process of the invention can have an internal diameter of 500 $\mu$m or less, preferably 300 $\mu$m or less, such as an internal diameter in the range of 50-250 $\mu$m. The wall thickness of the one or more hollow fibre membranes can be in the range of 20-300 $\mu$m, such as in the range of 40-250 $\mu$m, or in the range of 50-100 $\mu$m. The wall thickness essentially determines the diffusion pathway that the one or more target compounds have to travel to reach the second liquid that acts as strip liquid. Therefore, it is preferred that the wall of the hollow fibre membranes be thin. On the other hand, if the wall thickness is too thin, then the range of operating pressures is decreased.

The pores of the one or more hollow fibre membranes are preferably at least partly filled with the first liquid (*viz.* all pores are at least partly filled). In a preferred embodiment, the feed solution is an aqueous solution, the one or more hollow fibre membranes are hydrophobic, the first liquid is a hydrophobic organic liquid, and the second liquid is an aqueous liquid. In another embodiment, the feed solution is a hydrophobic organic solution, the one or more hollow fibre membranes are hydrophilic, the first liquid is an aqueous liquid, and the second liquid is a hydrophobic organic liquid. Preferably, the affinity between the first liquid and the membrane is higher than the affinity between the second liquid and the first liquid, the feed solution and the first liquid, the feed solution and the membrane and the second liquid and the membrane. In this way, the first liquid is stably confined to the pores of the membrane.

The one or more target compounds can suitably comprise a metal, such as one or more selected from the group consisting of aluminium, arsenic, cadmium, calcium, chromium, cobalt, copper, gallium, indium, iron, lead, magnesium, manganese, mercury, molybdenum, nickel, rare earth metals (including europium, gadolinium, lanthanum, neodymium, and praseodymium), selenium, silver, sodium, vanadium, and zinc. In another embodiment, the one or more target compounds comprise a radionuclide, such as one or more selected from the group consisting of strontium, caesium, technetium, uranium, boron, plutonium, cobalt, and americium. In yet another embodiment, the one or more target compounds comprise an organic acid, such as one or more selected from the group consisting of itaconic acid, succinic acid, fumaric acid, 2,5-furandicarboxylic acid, phenylalanine, acrylic acid, lactic acid, propionic acid, and acetic acid. It is further possible that the one or more target compounds comprise any combination of these target compounds.

The feed solution can comprise, but is not limited to, waste water or other process streams, such as liquid derived from a passivating bath used in a galvanising process, effluents from operation for the winning, refining, and/or recycling of metals, or from mining operations, also product, recycle, and/or waste streams in fermentation processes, or any (bio)chemical process producing 'building blocks' for the chemical, pharmaceutical or food industry.

The process of the invention is preferably performed in continuous mode. Hence, the feed solution and the first and second liquids are continuously fed to the one or more hollow fibre membranes, preferably using a hollow fibre membrane module. The feed solution may then be fed to the shell side of a hollow fibre membrane module and the slug flow of first and second liquids through the tube side of the hollow fibre membrane module.

It is preferred that the process of the invention further comprises a step of separating the first and second liquid when or after the slug flow exits the one or more hollow fibre membranes. This can be achieved relatively easy, because of the slug size, leading to large droplets in the outlet of the module. These droplets coalesce easily, forming two separate phases.

The first liquid comprises an extracting agent. This liquid is commonly referred to as the "extracting liquid". A wide range of extracting agents may be employed in accordance with the invention. In an embodiment, the extracting agent forms a complex, or at least associates, with the one or more target compounds. It is preferred that the extracting agent has a high selectivity to the one or more target compounds. The extracting agent can for instance be in the form of an ionophore that is capable of selectively binding one or more target ions to form a complex. Subsequently, the ionophore can be regenerated by treatment with an acid that may be comprised in the strip liquid. The ion is thereby released and transferred to the strip liquid. Typically, the extracting agent is capable of reversibly binding one or more target compounds.

The first liquid may comprise one or more extracting agents, depending on the application. Any extracting agent capable of extracting the one or more target compounds contained in the feed solution can in principle be used. Some examples of extracting agents, for example, include one or more selected from the group consisting of bis(2,4,4-trimethylpentyl) phosphinic acid), 2,4,4-trimethylpentyl phosphinic acid, di(2-ethyl hexyl) phosphoric acid, naphthalic acid, octylphenyl phosphoric acid, aryl sulphonic acids, hydroxyoximes, oxine derivatives, beta-diketones, alkarylsulphonamides, polyols, primary amines, secondary amines, tertiary amines, quaternary amines, tributyl phosphate, phosphonic acid esters, trioctyl phosphine oxide, diisopropyl ether, methyl isobutylketon, di-n-hexyl sulphide di(2,4,4-trimethylpentyl)dithiophosphonic acid), a nonylsalicyl aldoxime and ketoxime extracting system, oleic acid, and alkyl phenylphosphonic acids. Selection of suitable extracting agents based upon the specific target compound(s) to be extracted is within the level of the person skilled in the art. Suitable extraction agents are typically those which exhibit a high selectivity for the target compound.

The extracting agent can suitably be present in the first liquid together with a solvent. In case the first liquid is an organic hydrophobic liquid, the solvent may for instance comprise a hydrocarbon solvent, such as one or more selected from the group consisting of n-decane, n-undecane, n-dodecane, n-tridecane, n-tetradecane, isodecane, isoundecane, isododecane, and isotridecane or organic solvents in general (halogenated, oxygenated, etc.). Also distillate fractions can be used, such as kerosene, or those commercially available as Shellsol™ D70 (very low aromatic, inert hydrocarbon solvent) from Shell Chemicals (CAS Registry Number 64742-47-8), and Exxsol™ D80 (dearomatised aliphatic hydrocarbon) from ExxonMobil Chemical Company, and the like.

The first liquid may further comprise one or more modifier compounds to enhance the extraction of the one or more target compounds from the feed solution into the first liquid, to increase the solubility of the target component in the organic phase and/or to improve the phase separation characteristics of the system. These modifier compounds are solvating reagents which can be selected from the group of alcohols (such as isodecanol), nonyl phenol, nitrophenyl akyl ethers (including o-nitrophenyl octyl ether, o-nitrophenyl heptyl ether, o-nitrophenyl hexyl ether, o-nitrophenyl pentyl ether, o-nitrophenyl butyl ether, and o-nitrophenyl propyl ether), trialkyl phosphates (including tributyl phosphate and tris(2-ethylhexyl) phosphate), and mixtures thereof. Suitable alcohols, for instance, include hexanol, heptanol, octanol, nonanol, decanol, undecanol, dodecanol, tridecanol, tetradecanol, pentadecanol, hexadecanol, heptadecanol, octadecanol, and mixtures thereof.

In an embodiment, the first liquid comprises about 2-100 wt.% based on total weight of the first liquid of extracting agent and about 0-20 wt.% based on total weight of the first liquid of modifier compound. Preferably, the first liquid comprises about 5-40 wt.% based on total weight of the first liquid of extracting agent and about 1-10 wt.% based on total weight of the first liquid of modifier compound. Alternatively, the first liquid itself is the extracting agent.

The second liquid is preferably an aqueous liquid. The second liquid may suitably comprise an aqueous acid solution or an aqueous base solution or any other regenerating agent. For the removal of, for instance, metals the second solution suitably comprises an aqueous acid solution, such as a mineral acid. Examples of acids useful in the process of the invention include, but are not limited to, sulphuric acid, hydrochloric acid, nitric acid, phosphoric acid, and acetic acid. The acid can be present in any concentration. A suitable concentration for the acid in the second liquid is in the range of 1-4 M.

For other applications, such as removal of organic acids from a feed solution, the second solution preferably comprises an aqueous base solution. Examples of bases useful in the process of the invention include, but are not limited to, sodium carbonate, sodium bicarbonate, sodium hydroxide, ammonium hydroxide, and tetramethylammonium hydroxide. The base can be present in any concentration. A suitable concentration for the base in the second liquid is in the range of 0.2-2 M.

It is preferred in the pertraction process of the invention that the second liquid in the slug flow continuously regenerates extracting agent, so that the extracting agent is capable of continuously extracting the one or more target compounds from the feed solution in an efficient manner. This regeneration of the extracting agent is highly efficient in the process of the invention, because the slug flow conditions ensure a short diffusion path to the first liquid (viz. the liquid to be regenerated). In addition, shear of the second liquid along the fibre wall increases the transfer coefficients in comparison with droplets in an emulsion pertraction process.

In principle, the process of the invention can be applied for any kind of extraction. Preferably, the process of the invention is applied in processes where there is a small difference in density between the first liquid and the second liquid. These systems are not very appropriate for emulsion pertraction or extraction, because it is extremely difficult to separate the two phases from the emulsion.

Typically, the process of the invention can be applied for extraction of one or more target compounds that are present in the feed solution in a concentration in the range of 0.01-200 g/l, such as in the range of 0.1-100 g/l, or in the range of 0.5-50 g/l.

The invention will now be further demonstrated by means of the following example, which is not intended to limit the scope of the invention in any way.

Example

The removal of zinc was taken as an example to compare slug flow pertraction and emulsion pertraction.

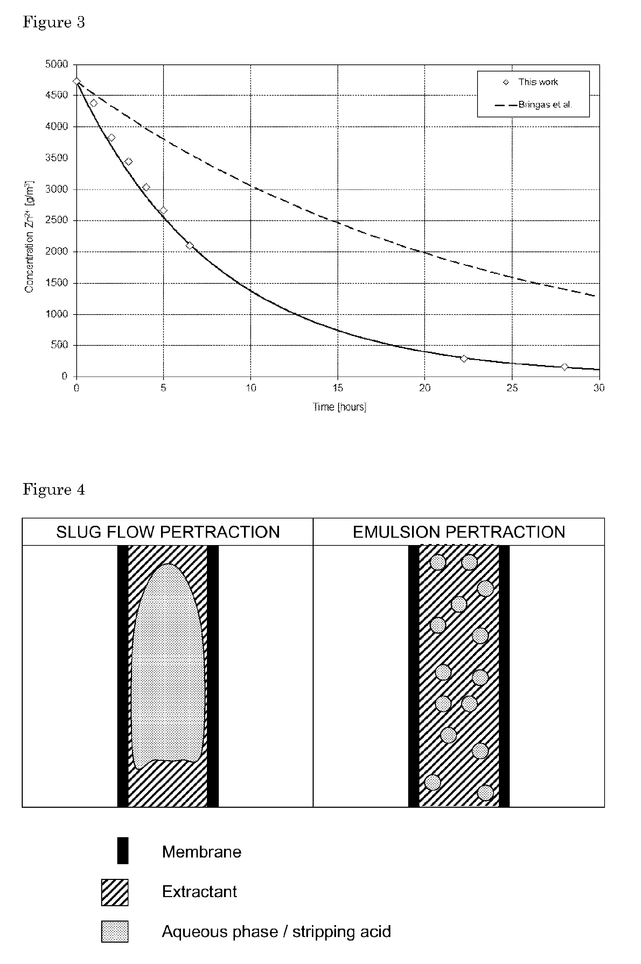

In this laboratory scale slug flow pertraction experiment, 9.5 litres of an aqueous sample (spent passivation bath taken from GTV Veenendaal, the Netherlands) was circulated through the shell side of a microporous hollow fibre membrane contactor (Liqui-cel Extra-Flow 2.5 × 8). A mixed phase of 0.1 litres extractant (20 vol.% Cyanex 272 (approx.imately 630 mol/m$^3$) in kerosene) and 2 litres of stripping acid (4 M $H_2SO_4$) was prepared in a buffer vessel by mechanical mixing. The droplet size of the organic phase in the continuous aqueous phase was maintained at several millimetres. This emulsion was circulated through the lumen of the membrane contactor. The flow of the passivation bath was 3 1/min and the flow of the extractant/stripping acid mixture was 0.3 1/min. The vessel containing the passivation bath was stirred at 300 rpm using an overhead stirrer. The extractant/stripping acid mixture was stirred at 700 rpm. The organic:stripping acid ratio is 0.05. The pH of the passivation bath was maintained at pH 2 by addition of 4 M NaOH. A constant temperature of 25 °C was maintained during the experiment. The decrease in zinc concentration is depicted in Figure 3.

The zinc concentration decreased from 4500 g/m$^3$ to 100 g/m$^3$ within 30 hours as is shown by the continuous line in Figure 3. The plotted solid line was obtained by fitting the experimentally obtained concentrations to a mass transfer coefficient (k) according to the following relation

$$\frac{\partial m}{\partial t} = J \cdot A = k \cdot A \cdot \Delta C_{Zn},$$

wherein $\frac{\partial m}{\partial t}$ is the mass transport per unit time in gs$^{-1}$, $J$ is the mass flux through the membrane in gm$^{-2}$s$^{-1}$, $A$ is the effective membrane area in m$^2$, $k$ is the mass transfer

coefficient in ms$^{-1}$, and $\Delta C_{Zn}$ is the difference in zinc concentration in gm$^{-3}$.

Within emulsion pertraction and slug flow pertraction the zinc concentration is continuously stripped in the organic phase and therefore the concentration difference ($\Delta C_{Zn}$) can be replaced by the concentration of zinc in the aqueous phase.

By applying the slug flow pertraction process of the invention a mass transfer coefficient of $2.3 \times 10^{-7}$ m/s was obtained.

Bringas et al. (Computers and Chemical Engineering 2011, 35(5), 918-927) modelled and validated the emulsion pertraction process under various conditions (pH range: 2-3, Cyanex 272 concentration range: 200-1000 mol/m$^3$, zinc concentration range: 2500-6500 g/m$^3$, 8000-20500 rpm stirring speed in the emulsion tank (for the creation of an emulsion), the passivation bath however was circulated through the lumen of the membrane contactor and the emulsion was circulated through the shell side of the membrane contactor. The flow of the passivation bath was 0.15 l/min and the flow of the emulsion was 0.67 l/min. This should not yield any difference since mass transfer resistance in the aqueous phase can be neglected under these conditions. The ratio organic: stripping acid was 4 (this has to be high since the stripping acid needs to be emulsified in the organic phase and therefore an excess of organic phase is required). Under these conditions Bringas *et al.* obtained a mass transfer coefficient of $8.2 \times 10^{-8}$ m/s, which is a factor 3 lower than the 'slug flow pertraction' of the present invention (the dashed line in Figure 3 shows the results of Bringas *et al.*).

This difference can be explained by the fact that the distance between the aqueous phase and the stripping acid is smaller in the case of 'slug flow pertraction' and that less organic phase is required in case of 'slug flow pertraction'. This is illustrated in Figure 4. In emulsion pertraction small droplets of stripping acid are generated within the organic phase. The distance of these stripping acid droplets to the membrane differs for each droplet. Some are close to the membrane, while other droplets are far from the membrane. For the 'slug flow pertraction' process of the present invention each slug is close to the membrane, which minimizes the diffusion path from the aqueous phase towards the stripping phase.

The negative influence of the distance ($\delta$) between both phases on the mass transfer coefficient is given by the following relation

$$k = \frac{D}{\delta},$$

wherein $k$ is the mass transfer coefficient in ms$^{-1}$, $D$ is the diffusion coefficient in m$^2$s$^{-1}$, and $\delta$ is the diffusion path length in m.

**Claims**

1. Pertraction process for lowering the concentration of one or more target compounds in a feed solution, comprising

   - flowing on a first side of one or more hollow fibre membranes a first liquid comprising extracting agent and a second liquid acting as strip liquid, wherein said first liquid is immiscible with said second liquid, and wherein said first liquid and second liquid flow on the first side of the one or more hollow fibre membranes in a slug flow and wherein at least part of the first liquid is present in pores of the membrane; and
   - contacting the feed solution with the surface of a second side of the one or more hollow fibres.

2. Pertraction process according to claim 1, wherein

   i) the first side of the one or more hollow fibres is the inner side of the one or more hollow fibres and the second side of the one or more hollow fibres is the outer side of the one or more hollow fibres; or
   ii) the first side of the one or more hollow fibres is the outer side of the one or more hollow fibres and the second side of the one or more hollow fibres is the inner side of the one or more hollow fibres.

3. Pertraction process according to claim 1 or 2, wherein said first liquid is immiscible with said feed solution, preferable the first liquid is an organic liquid and the feed solution is an aqueous solution.

4. Pertraction process according to any one of claims 1-3, wherein the average length of the slugs of the first liquid in the one or more hollow fibre membranes is equal to or smaller than the average length of the slugs of the second liquid in the one or more hollow fibre membranes.

5. Pertraction process according to any one of claims 1-4, wherein the average length of the slugs of the first liquid in the one or more hollow fibre membranes is in the range of 1-100 times, preferably 1-10 times the inner diameter of the fibre and/or wherein the average length of the slugs of the second liquid in the one or more hollow fibre membranes is in the range of 1-100 times, preferably 1-10 times the inner diameter of the fibre.

6. Pertraction process according to any one of claims 1-5, wherein the one or more hollow fibre membranes are hydrophobic.

7. Pertraction process according to any one of claims 1-6, wherein the one or more hollow fibre membranes comprise a polymer, preferably, one or more selected from the group consisting of polypropylene, polytetrafluorethylene, polyethylene, polysulphone, polyethersulphone, polyetheretherketone, polyimide, and polyamide.

8. Pertraction process according to any one of claims 1-7, wherein the one or more hollow fibre membranes have an internal diameter of 500 $\mu$m or less, preferably 300 $\mu$m or less such as 50-250 $\mu$m.

9. Pertraction process according to any one of claims 1-8, wherein the one or more hollow fibre membranes have a wall thickness in the range of 20-300 $\mu$m, preferably in the range of 40-250 $\mu$m, such as in the range of 50-100 $\mu$m

10. Pertraction process according to any one of claims 1-9, wherein the one or more target compounds comprise a metal, such as one or more selected from the group consisting of aluminium, arsenic, cadmium, calcium, chromium, cobalt, copper, gallium, indium, iron, lead, magnesium, manganese, mercury, molybdenum, nickel, rare earth metals, selenium, silver, sodium, vanadium, and zinc.

11. Pertraction process according to any one of claims 1-10, wherein the feed solution comprises waste water, liquid derived from a passivating bath; effluents from operation for the winning, refining, and/or recycling of metals, or from mining operations; product, recycle, and/or waste streams in fermentation processes; or any (bio)chemical process producing 'building blocks' for the chemical, pharmaceutical or food industry

12. Pertraction process according to any one of claims 1-11, wherein said process is performed continuously.

13. Pertraction process according to any one of claims 1-12, further comprising a step of separating the first and second liquid when or after the slug flow exits the one or more hollow fibre membranes.

14. Pertraction process according to any one of claims 1-13, wherein the said second liquid is an aqueous liquid.

15. Pertraction process according to any one of claims 1-14, wherein the second liquid in the slug flow continuously regenerates extracting agent.

Figure 1

Figure 2

Figure 3

Figure 4

| SLUG FLOW PERTRACTION | EMULSION PERTRACTION |
|---|---|
| | |

■ Membrane

▨ Extractant

▦ Aqueous phase / stripping acid

Europäisches
Patentamt

European
Patent Office

Office européen
des brevets

# EUROPEAN SEARCH REPORT

**Application Number**

EP 11 17 1339

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2010/226839 A1 (LIAN JIAN-JOU [TW] ET AL) 9 September 2010 (2010-09-09) * paragraphs [0016] - [0022]; figures 1,2 * ----- | 1-15 | INV. B01D63/02 B01D61/24 C02F1/26 C02F1/44 G21F9/12 C22B3/24 B01D61/38 |
| A | CARRERA J A ET AL: "Selective membrane alternative to the recovery of zinc from hot-dip galvanizing effluents", JOURNAL OF MEMBRANE SCIENCE, ELSEVIER SCIENTIFIC PUBL.COMPANY. AMSTERDAM, NL, vol. 326, no. 2, 20 January 2009 (2009-01-20), pages 672-680, XP025870325, ISSN: 0376-7388, DOI: 10.1016/J.MEMSCI.2008.11.002 [retrieved on 2008-11-07] * abstract; figure 1 * * section 2. Experimental Set up * ----- | 1-15 | |
| A | EUGENIO BRINGAS ET AL: "Development and validation of a dynamic model for regeneration of passivating baths using membrane contactors", COMPUTERS & CHEMICAL ENGINEERING, vol. 35, no. 5, 1 May 2011 (2011-05-01), pages 918-927, XP55013363, ISSN: 0098-1354, DOI: 10.1016/j.compchemeng.2011.01.021 * abstract; figure 1 * * section 2. * ----- | 1-15 | **TECHNICAL FIELDS SEARCHED (IPC)** B01D C02F G21F C22B |

The present search report has been drawn up for all claims

| Place of search | Date of completion of the search | Examiner |
|---|---|---|
| Munich | 29 November 2011 | Hennebrüder, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 1339

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2011

| Patent document cited in search report | Publication date | Patent family member(s) | Publication date |
|---|---|---|---|
| US 2010226839 A1 | 09-09-2010 | NONE | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0156933 A
- US 20100224030 A
- US 20100226839 A

**Non-patent literature cited in the description**

- **KLAASSEN et al.** *Desalination,* 2008, vol. 224, 81-87
- **BRINGAS et al.** *Computers and Chemical Engineering,* 2011, vol. 35 (5), 918-927